**Europäisches Patentamt**

**European Patent Office**

**Office européen des brevets**

(19)

(11) Veröffentlichungsnummer : **0 406 278 B1**

(12) # EUROPÄISCHE PATENTSCHRIFT

(45) Veröffentlichungstag der Patentschrift :
**19.05.93 Patentblatt 93/20**

(51) Int. Cl.⁵ : **C09K 11/02, C04B 14/00**

(21) Anmeldenummer : **89903699.0**

(22) Anmeldetag : **23.03.89**

(86) Internationale Anmeldenummer :
**PCT/DE89/00185**

(87) Internationale Veröffentlichungsnummer :
**WO 89/09250 05.10.89 Gazette 89/24**

(54) **VERFAHREN ZUR HERSTELLUNG VON MIT EINEM GLAS UMMANTELTEN FLUORESZIERENDEN ODER PHOSPHORESZIERENDEN PIGMENTEN.**

Die Akte enthält technische Angaben, die nach dem Eingang der Anmeldung eingereicht wurden und die nicht in dieser Patentschrift enthalten sind.

(30) Priorität : **24.03.88 DE 3809937**

(43) Veröffentlichungstag der Anmeldung :
**09.01.91 Patentblatt 91/02**

(45) Bekanntmachung des Hinweises auf die Patenterteilung :
**19.05.93 Patentblatt 93/20**

(84) Benannte Vertragsstaaten :
**AT BE CH DE FR GB IT LI NL**

(56) Entgegenhaltungen :
**DE-A- 2 747 509**
**US-A- 4 473 634**

(73) Patentinhaber : **BAUERECKER, Sigurd**
**Krüzener Weg 1**
**W-2058 Schnakenbeck (DE)**

(72) Erfinder : **CAMMENGA, Heiko K.**
**Johanniterstr. 7A**
**W-3300 Braunschweig (DE)**
Erfinder : **BAUERECKER, Sigurd**
**Westerberg 4**
**W-3305 Sickte (DE)**
Erfinder : **LELING, Menno**
**Dubberskamp 13**
**W-2820 Bremen 7 (DE)**

(74) Vertreter : **Gralfs, Harro, Dipl.-Ing.**
**Am Bürgerpark 8**
**W-3300 Braunschweig (DE)**

**EP 0 406 278 B1**

## Beschreibung

Die Erfindung bezieht sich auf ein Verfahren zur Herstellung von mit einem Glas ummantelten fluoreszierenden oder phosphoreszierenden Pigmenten.

Leuchtpigmente mit fluoreszierenden oder phosphoreszierenden Eigenschaften sollen durch die Ummantelung mit einem Glas gegen Vergrauung geschützt werden, der sie unter Gebrauchsbedingungen nach einiger Zeit beispielsweise durch photochemische Reaktion unterliegen.

Es ist bekannt (DE-OS 28 47 509), die einzelnen Pigmentkristalle silikatisch nach einem Sol-Gel-Verfahren mit Glas zu ummanteln. Das Glasanteil beträgt dabei 0,1 bis 0,01 Massen-% der Pigmente. Die nach diesem Verfahren ummantelten Pigmentkörnchen fallen als feines Pulver an. Dieses Pigment vergraut unter Witterungseinfluß deutlich bereits nach ein bis zwei Wochen. Eine nach dem Sol-Gel-Verfahren hergestellte Glasummantelung hat darüber hinaus nur eine geringe mechanische Festigkeit, so daß sich aus diesem Grund die Verwendung der glasummantelten Pigmente für mechanisch beanspruchte nachleuchtende Überzüge beispielsweise auf Betonsteinen oder -platten, die auf Fahrbahnen verlegt werden, oder sonstige mechanisch beanspruchte nachleuchtende Flächen nicht geeignet ist.

Es sind weiter Leuchtfliesen bekannt, bei denen eine Schicht aus lumineszierenden Pigmenten durch eine transparente Glasur abgedeckt ist.

Aufgabe der Erfindung ist ein Verfahren der eingangs erwähnten Art, mit dem es möglich ist, eine Glasummantelung der Pigmente herzustellen, die das Pigment in hohem Maße gegen Witterungseinflüsse schützt und eine hohe mechanische Festigkeit hat.

Diese Aufgabe wird gemäß der Erfindung gelöst durch die im kennzeichnenden Teil des Patentanspruchs 1 herausgestellten Merkmale.

Zweckmäßige Ausgestaltungen des Verfahrens für die Herstellung und zweckmäßige Verfahren für die Anwendung solcher glasummantelten Pigmente sind Gegenstand der Unteransprüche.

In der Zeichnung sind geformte Körper, die nach dem Verfahren gemäß der Erfindung hergestellt sind, sowie unter Verwendung solcher geformter Körper hergestellte Gegenstände mit nachleuchtender Oberfläche dargestellt.

Fig. 1      zeigt verschiedenen Formen von nachleuchtenden Körpern, die aus mit Glas ummantelten Pigmenten bestehen bzw. mit einem Überzug aus mit Glas ummantelten Pigmenten versehen sind,

Fig. 2      zeigt im Querschnitt einen Teil einer Betonplatte mit in die Oberfläche eingebetteten Formkörpern,

Fig. 3      zeigt im Schnitt in eine Vertiefung eines Bauelements eingelegte Formkörper mit nachleuchtenden Eigenschaften,

Fig. 4      zeigt ein Verkehrsschild mit einer Oberfläche, in die Formkörper mit nachleuchtenden Eigenschaften eingebettet sind,

Fig. 5      zeigt einen Ausschnitt aus der Oberfläche des Verkehrsschildes nach Fig. 4.

Als phosphoreszierende Pigmente sind anorganische Verbindungen, wie Zinksulfide, Zinkcadmiumsulfide, Erdalkalisulfide, gebräuchlich. Die Leuchtfähigkeit wird erst durch den Einbau von kleinen Mengen an kristallgitterfremden Ionen (Aktivatoren) in das Kristallgitter des Grundmaterials gewährleistet. Diese Aktivatoren sind Schwermetalle (z. B. Kupfer) oder seltene Erden und bestimmen die Farbe der ausgesendeten Strahlung mit.

Der gebräuchlichste grün nachleuchtende Pigment ist Zinksulfid (ZnS:Cu).

Weitere bekannte nachleuchtende Pigmente sind (ZnS,Cd) S:Cu, SrS:Bi, CaS:Bi, ZnS:Cu, (Sr,Ca)S:Bi, ZnS:Ag, (Zn,Cd) S:Ag.

Wesentlicher Gegenstand der Erfindung sind Körper mit derartigen Pigmenten, bei denen die Pigmente mit Glas ummantelt sind. Die Ummantelung erfolgt dabei durch Einschmelzen der Pigmente in ein schwermetallfreies Glas mit einer Erweichungstemperatur, die niedriger liegt als 800 °C, da bei bei etwa 800 °C Pigmente der erwähnten Art zerstört werden. Das Glas muß von Schwermetallen frei sein, da die Oxide von Schwermetallen wie Pb, Fe, Co, Ni die Lumineszenzstrahlung der Pigmente absorbieren. Das Glas soll weiter im sichtbaren optischen Bereich und möglichst auch im UV-Bereich transparent sein. Schließlich soll das Glas eine hohe Alkalibeständigkeit haben, insbesondere wenn die Körper in eine zementhaltige Matrix eingebettet werden sollen.

Gläser, die die genannten Voraussetzungen erfüllen, sind solche, die Kombinationen der folgenden Bestandteile aufweisen: $SiO_2$, $B_2O_3$, $Li_2O$, $Na_2O$, $K_2O$, CaO, $Al_2O_3$, ZnO, F.

Zweckmäßig ist ein Glas des Drei-Stoff-Systems $Na_2O$-$B_2O_3$-$SiO_2$. Das Glas kann dabei 25 bis 30 Massen-% - vorzugsweise 26 Massen-% - $Na_2O$, 25 bis 30 Massen-% - vorzugsweise 26 Massen-% - $B_2O_3$ und 45 bis 50 Massen-% vorzugsweise 46 Massen-% - $SiO_2$ enthalten.

Ein anderes Glas, das die oben genannten Voraussetzungen erfüllt, ist ein Glas des Drei-Stoff-Systems CaO-$Al_2O_3$-$SiO_2$ mit einem Zusatz von $B_2O_3$ zur Schmelztemperaturerniedrigung, und zwar mit 5 bis 10 Mas-

EP 0 406 278 B1

sen-% CaO, 5 bis 20 Massen-% $Al_2O_3$, 40 bis 60 Massen-% $SiO_2$ und 5 bis 30 Massen-% $B_2O_3$.

Das Glas wird für das Verfahren in fein vermahlener Form eingesetzt und zwar in einer Feinheit, wie sie für Emailfritten üblich ist, also mit einem Größenbereich von 10 bis 100 μm, vorzugsweise mit einer mittleren Größe von 25 bis 35 μm. So können transparente Emailfritten verwendet werden, beispielsweise handelsübliche bleifreie Aluminium-Emailfritten ohne Trübungsmittel. Für die Herstellung von Emailfritten verwendete Gläser haben im allgemeinen eine niedrige Schmelztemperatur.

So sind beispielsweise die Fritten R1780, R1568, R1569 der Firma Reimbold & Strick, Köln, geeignet, trotz der bei diesen Emails nicht optimalen Transparenz. Als Glaslote können beispielsweise die Glaslote 8470 und G017 der Firma Schott Glaswerke, Mainz, verwendet werden.

Die für das Verfahren verwendeten lumineszierenden Pigmente haben im allgemeinen eine mittlere Korngröße von 40 bis 50 μm.

Zur Herstellung von Körpern mit fluoreszierenden oder phosphoreszierenden Eigenschaften werden das fein vermahlene Glas und das pulverförmige Pigment im Verhältnis 100 : 1 bis 1 : 1, vorzugsweise 5 : 1 bis 2 : 1 gemischt. Das Gemisch wird anschließend auf eine Temperatur aufgeheizt, bei der das Glas soweit erweicht, daß das Pigment vom Glas allseitig umschlossen wird. Das Glas soll bei der Endtemperatur eine Viskosität in der Größenordnung von 10 bis $10^5$ dPas haben.

Bei einem Glas mit einer ungefähren Dichte von 2,3 und einer Dichte des Pigments von ungefähr 4 hat sich eine Viskosität von 4,5 bis 6,5 x $10^5$ dPas als zweckmäßig herausgestellt.

Die genannte Viskosität wird für die genannten Gläser bei einer Temperatur von 650 bis 750 °C erreicht. Bei Einhalten der Viskosität wird sichergestellt, daß das Pigment beim Erweichen des Glases im wesentlichen in der Verteilung in dem Glas verbleibt, in der es im Gemisch vorliegt.

Die gewünschte Viskosität kann durch übliche die Viskosität beeinflussende Zusätze wie Binde- oder Netzmittel eingestellt werden.

Um für die weiter unten zu beschreibenden Körper eine gute Haftung in silikatischen Baustoffen, beispielsweise in Betonmischungen, zu erreichen, kann dem Gemisch zusätzlich 5 bis 30 Massen-% weißer Quarzsand zugemischt werden mit einer Korngröße von 100 bis 500 μm.

Körper aus von Glas umschlossenen lumineszierenden Pigmenten können als Granulat oder als geformte Körper hergestellt werden.

Zur Herstellung von Granulat wird das Gemisch aus fein vermahlenem Glas und Pigment ggf. unter Zusatz von Quarzsand beispielsweise in Tiegeln aufgeschmolzen. Der so gebildete Körper wird dann zerkleinert, wobei Granulat von unregelmäßiger Form entsteht, das eine Korngröße zwischen 0,1 und 20 mm haben kann. Da beim Zerkleinern der erschmolzenen Blöcke vielfach Bruchflächen zwischen der Glasmatrix und den darin eingebetteten Pigmenten auftreten, also ein Teil der Pigmente nach dem Zerkleinern des Glasblocks ungeschützt ist, wird das Granulat vorzugsweise noch einmal auf Erweichungstenmperatur aufgeheizt, beispielsweise in einem Durchlaufofen. Dabei schließt sich bei der überwiegenden Zahl der Bruchflächen, durch die die Pigmente freigelegt werden, die Glasummantelung. Soweit das Granulat bei der weiteren Verarbeitung auf einen Träger aufgeschmolzen wird, beispielweise zur Erzeugung einer nachleuchtenden Oberfläche auf Schildern oder dergleichen, kann auf eine erneute Aufheizung auf Erweichungstemperatur verzichtet werden, da diese Erweichungstemperatur beim Aufschmelzen auf einen vorzugsweise metallischen Träger ohnehin wieder erreicht wird und dann Fehlstellen in der Ummantelung geschlossen werden.

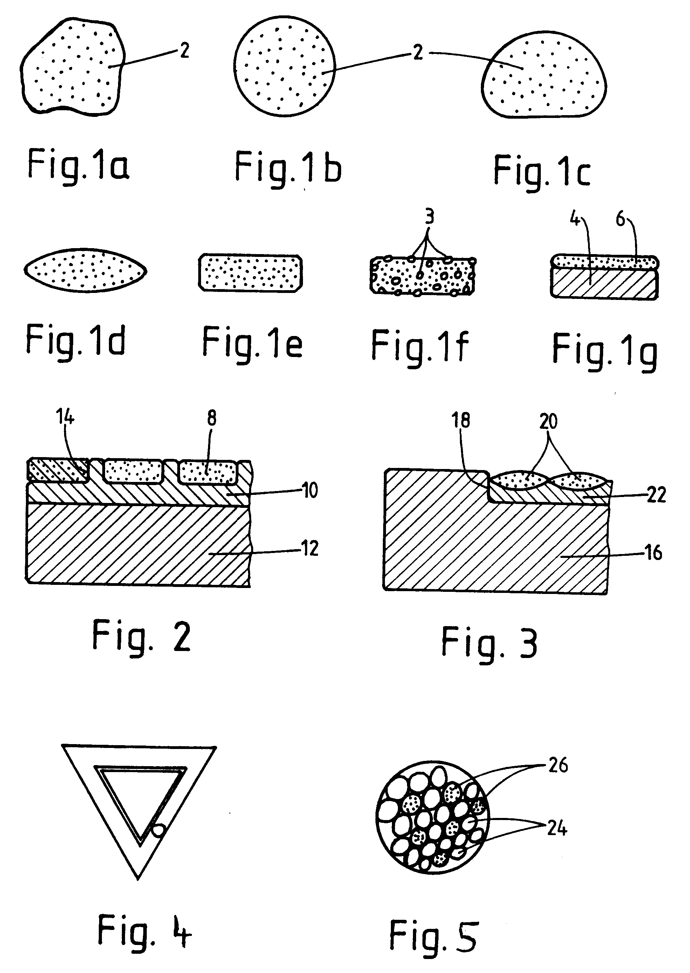

Ein typisches Granulatkorn ist in Fig. 1a beispielsweise veranschaulicht. Wie hieraus ersichtlich, enthält dieses Korn 2 in die Glasmatrix eingebettet eine Vielzahl von Pigmentkörnern, die durch Punkte angedeutet sind, und soweit vorgesehen auch Quarzsandkörner, die in in Fig. 1a nicht dargestellt sind.

Aus dem Gemisch können vor der Erwärmung auch Formkörper hergestellt werden.

Zur Verdichtung und Konsistenzverbesserung kann dem Gemisch ein Haftmittel und/oder Wasser zugegeben werden.

Zur Herstellung von Formkörpern wird das Glas- Pigmentpulver-Gemisch mit einer Flüssigkeit, insbesondere mit Wasser, aufgeschwemmt oder angeteigt. Die Flüssigkeit kann rückstandslos verbrennende Bindemittel und/oder Netzmittel enthalten. Zur Herstellung von sich frei formenden Formkörpern wird eine Suspension hergestellt, die auf eine hydrophile Unterlage aufgetropft wird. Die Oberflächenspannung der dem Gemisch zugesetzten Flüssigkeit erzeugt dabei eine Kugel- oder Halbkugelform, wie sie in Fig. 1b bzw. 1c dargestellt ist. Die Halbkugelform kann dabei durch das Eigengewicht der Suspension erzeugt werden. Durch Verdampfung oder Diffusion der Flüssigkeit in die Unterlage entstehen relativ feste Kugeln bzw. Halbkugeln, die z. B. im Durchlaufofen aufgeschmolzen werden können. Auf diese Weise lassen sich Kugeln mit Durchmessern zwischen etwa 0,1 und 20 mm herstellen, wie sie in Fig. 1b und 1c dargestellt sind.

Formkörper lassen sich auch durch Formpressen herstellen, beispielsweise in bekannten Tablettenpressen. Auch hier wird das Glas-Pigmentpulver-Gemisch mit einem Bindemittel und ggf. mit einem Netzmittel vermischt und auf eine für das Tablettieren geeignete Konsistenz eingestellt. Die Tablettierung ermöglicht eine kostengünstige Massenherstellung. Die Formkörper können dabei linsenförmig, wie in Fig. 1d dargestellt, oder aber auch zylindrisch bzw. mit einem Polyedergrundriß, wie einem Sechs- oder Achteck, hergestellt werden. Mit der Tablettierung lassen sich wirtschaftlich Formkörper in der Größe von 1 bis 50 mm herstellen.

Wie bereits oben erwähnt, kann zur Erhöhung der Haftung in silikatischen Bindemitteln dem Gemisch Quarzsand zugefügt werden. Ein Formkörper entsprechend Fig. 1e mit einem solchen Quarzsand-Zusatz 3 ist schematisch in Fig. 1f dargestellt.

Die Lumineszenzstrahlung der Pigmente nimmt von der freiliegenden Oberfläche aus gesehen in die Tiefe schnell ab, und zwar auch dadurch, daß tiefer liegende Pigmente im Schatten von darüber liegenden Pigmenten liegen. Für viele Anwendungsfälle, insbesondere im Straßenbau oder dergleichen, wird von den Glas-Pigment-Körpern in Form von Granulat oder auch geformten Körpern eine hohe Festigkeit verlangt. Dies erfordert in vielen Fällen ein gewisses Mindestvolumen. Damit wird aber nur ein geringer Teil des eingesetzten Pigmentes aktiv genutzt.

Um zu einer höheren Ausnutzung des Pigmentzusatzes zu kommen, kann das Glas-Pigment-Gemisch auch in relativ dünner Schicht auf einen Grundkörper aufgeschmolzen weiden. Als Grundkörper können hierbei beispielsweise Quarzkies, aber auch vorgeformte Körper aus Glas oder Keramik verwendet werden. Das Glas-Pigment-Gemisch wird hierbei wie eine Emaillefritte in einer Flüssigkeit aufgeschwemmt, wobei zusätzlich noch rückstandslos verbrennende Bindemittel und/oder netzmittel hinzugefügt werden können. Die Suspension wird dann auf die Grundkörper aufgetragen, und das Glas in der Deckschicht wird dann beispielsweise im Durchlaufofen aufgeschmolzen.

Versuche haben gezeigt, daß beim Auftragen solcher Schichten in Dicken bis 1 mm auf Quarzkies und Kugeln aus Glas und Ton gute Ergebnisse bezüglich Glashaftung und thermischem Ausdehnungsverhalten erreichbar sind. Die Glas-Pigment-Schicht kann dabei den Träger allseitig umschließen, aber auch einseitig aufgebracht sein, wie in Fig. 1g dargestellt. Auf ein Substrat 4, das ein hartgebrannter Keramikformkörper sein kann, ist hier eine Glas-Pigment-Schicht 6 aufgeschmolzen.

Glas-Pigment-Körper, wie sie vorstehend beschrieben sind, können beispielsweise zur Erzeugung nachleuchtender Oberflächen im Hoch- und Tiefbau eingesetzt werden. Hierbei können die Glas-Pigment-Körper in eine Matrix mit einem silikatischen Binder eingebettet werden, wobei als silikatischer Binder vorzugsweise Zement benutzt werden wird. Als Binder sind aber auch Kalk und Gips verwendbar. Die Matrix selbst sollte dabei ein möglichst hohes Reflexionsvermögen haben. Bevorzugt ist hierbei als Binder weißer Zement mit Füllstoffen aus Quarzsand bzw. Quarzglas.

MIschungen aus Weißzement, Quarzsand und Glas-Pigment-Körpern in Form von gebrochenem Granulat und/oder Kugeln lassen sich als Vorsatzschichten bei Betonfertigbauteilen oder als Putze verwenden, die auf die zu markierenden Flächen aufgetragen werden. Die wirksamen Oberflächen der Glas-Pigment-Körper sind nach dem Erhärten der Matrix so vollständig wie möglich zu reinigen, damit ein ungehinderter Lichteintritt und Austritt der Lumineszenzstrahlung gewährleistet ist.

Im folgenden wird die Zusammensetzung von Betonvorsatzschichten bzw. Putzen mit nachleuchtenden Eigenschaften beispielhaft angegeben.

Zur Herstellung des Granulats wurden 10 Massenanteile bleioxisfreies Glaslot Nr. 8470 der Firma Schott Glaswerke, Mainz, in Pulverform, Körnungsstufe K3 (99 % < 60 μm, 50 % < 10 μm) mit einer Schmelztemperatur von ca. 680 °C mit 3 Massenanteilen eines lumineszierenden Pigments der chemischen Zusammensetzung ZnS:Cu mit einer Korngröße von etwa 40 μm gemischt und bei der Schmelztemperatur des Glaslotes aufgeschmolzen. Der so erzeugte Glasblock wurde zeekleinert, und es wurde die Kornfraktion 4 bis 6 mm abgesiebt.

Es wurde in gleicher Weise Granulat hergestellt, bei dem als Glas ein Emailglas R 1780 der Firma Reimbold & Strick, Köln, verwendet wurde.

13 Massenanteile des so erzeugten Granulats mit einer Korngröße von 4 bis 6 mm wurden jeweils gemischt mit

a) 20 Massenanteilen weißem Zement als Bindemittel,
b) 90 Massenanteilen weißem reinen Quarzkies/-sand als Füllstoff und
c) 8 Massenanteilen Wasser.

Die Mischung wurde als Vorsatzschicht in eine Form eingebracht und mit üblichem Beton hinterfüllt.

Mit Betonplatten mit Vorsatzschichten gemäß den Beispielen wurden Vergleichsversuche mit Betonplatten, die entsprechend der DE-OS 14 71 345 mit direkter Einbettung eines lumineszierenden Pigmentes in den Beton im Massenverhältnis Kies : Pigment von 5 : 1 hergestellt waren - Vergleichsprobe -, durchgeführt.

In konzentrierter Salzsäure bei zusätzlicher Wärmezufuhr lösten sich die Vergleichsproben nach kurzer Zeit weitgehend auf. Sie verloren ihre Nachleuchteigenschaften völlig, weil sich das Pigment unter Freiwerden von Schwefelwasserstoff zersetzte. Dagegen blieben die Glas-Pigment-Körper der Proben mit den erfindungsgemäß in Glas eingebetteten Pigmenten bezüglich Form- und Nachleuchteigenschaften vollständig erhalten.

Auch unter weniger drastischen Bedingungen wurde beobachtet, daß frei in Beton eingebettete lumineszierende Pigmente auf Zinksulfidbasis durch Säuren zerstört werden. Zudem tritt bei gleichzeitiger Einwirkung von UV-Strahlung und Luftfeuchtigkeit eine Vergrauung ein. Proben gleicher Masse mit unterschiedlichen Pigmentanteilen wurden unter intensiver UV-Bestrahlung (UV-Lampe im Abstand von 5 bis 10 cm) drei Stunden lang mit 3 %iger Schwefelsäure betropft. Bei allen Proben wurde eine leichte Materialabtragung beobachtet; bei den Vergleichsproben trat eine leichte Vergrauung auf. Die erfindungsgemäßen Proben blieben hinsichtlich ihrer Nachleuchteigenschaften unverändert.

Bei einem weiteren Versuch wurden Proben auf einem Dach zwei Monate lang natürlichen Witterungseinflüssen ausgesetzt. Es konnte keine Beeinträchtigung der Oberfläche festgestellt werden. Die Nachleuchtintensität der dem Versuch unterworfenen Vergleichsproben war gegenüber Vergleichsproben, die in einem trockenen Raum aufbewahrt wurden, deutlich geringer. Dieses Verblassen wird auf die natürliche UV-Strahlung bei gleichzeitiger Einwirkung von Feuchtigkeit zurückgeführt. Bei den erfindungsgemüßen Proben wurde bei den dem Versuch unterworfenen Proben gegenüber den in einem trockenen Raum aufbewahrten Proben keine Veränderung der Nachleuchtintensität festgestellt.

Die Anbringung von phosphoreszierenden Oberflächen und/oder Bauteilen ist bei folgenden Objekten bzw. an folgenden Standorten besonders vorteilhaft: in schwach beleuchteten Ortschaften, an Landstraßen, an Bordsteinen, Flughäfen, Landebahnen, Türmen, Schornsteinen und dergleichen.

Insbesondere für den Straßenbau lassen sich mit den Glas-Pigment-Körpern Steine oder Platten mit nachleuchtenden Oberflächen herstellen. Hierbei wird, wie oben bei den Beispielen angegeben, zunächst eine Vorsatzschicht mit Glas-Pigment-Körpern in die Form eingefüllt und anschließend die Form mit Beton aufgefüllt. Die an der Oberfläche liegenden Glas-Pigment-Körper sind auch hier anschließend zu reinigen.

Für die Herstellung von Betonplatten oder Betonsteinen können die oben beschriebener. Formkörper außer in Granulatform auch als Kugeln sowie in Form von Linsen, Zylindern oder Platten verwendet werden, wie sie oben unter Bezug auf Fig. 1b bis 1g beschrieben sind. Solche Formkörper können dabei auf einer Haftfolie vorgeordnet werden, die mit einem Abbindeverzögerer beschichtet ist. Diese Haftfolie mit den daran anhaftenden Formkörpern wird dann in die Form eingelegt, auf die Formkörper wird dann die alkaliarme Matrixmischung aus weißem Zement, Quarzkies und Wasser für die Vorsatzschicht aufgebracht und die Form anschließend mit Beton aufgefüllt.

Nach Härten des Betons wird die Haftfolie abgezogen, und es kann dann der aufgrund des Abbindeverzögerers nicht erhärtete Teil der Vorsatzschicht abgewaschen und damit die Oberfläche der Glas-Pigment-Formkörper gereinigt werden.

Ein Querschnitt durch eine Betonplatte, die in der beschriebenen Weise hergestellt ist, ist in Fig. 2 dargestellt. Die Glas-Pigment-Formkörper 8, die hier gemäß Fig. 1e oder vorzugsweise gemäß Fig. 1f mit Quarzsandzusatz ausgebildet sind, sind in der alkaliarmen Vorsatzschicht 10 eingebettet, die auf der tragenden Betonschicht 12 aufruht.

Beton ist in der Regel alkalisch und hat einen pH-Wert von über 10. Damit ist die Gefahr eines Laugeneingriffs auf das Glas gegeben, bei dem alkalische Lösungen das $SiO_4$-Netzwerk aufspalten, so daß das Glas insgesamt in Lösung geht. Neben der Verwendung eines laugenbeständigen Glases als Gegenmaßnahme sollte auf eine möglichst geringe Alkalizität des Bindemittels in dem Teil der Matrix des Betons geachtet werden, der unmittelbar Berührung mit den Glas-Pigment-Körpern hat, beispielsweise durch Verwendung eines Spezialzements mit niedrigem Alkaligehalt oder durch Zusatzstoffe, wie z. B. Phonolithe, in der Matrixmischung für die Vorsitzschicht.

Die Glas-Pigment-Formkörper können auch, wie in Fig. 2 links angedeutet, mit einem Keramikformkörper 14 als Träger ausgebildet sein, der mit einer Glas-Pigment-Schicht versehen ist, wie in Fig. 1g dargestellt und oben beschrieben. Auch Quarzsteine, die mit einer Glas-Pigment-Schicht ggf. mit einem Quarzsandzusatz überfangen sind, können verwendet werden.

Glas-Pigment-Körper lassen sich auch nachträglich in stark mechanisch beanspruchte Baukörper einsetzen. Diese Baukörper können dabei entsprechend vorgeformt sein, beispielsweise durch Vorsehen einer vertieften Aufnahme für solche Körper. Solche Aufnahmen können aber auch nachträglich eingefräst werden. Als Beispiel hierfür seien Bahnsteigkanten oder Fahrbahnmarkierungen genannt.

Eine Ausführungsmöglichkeit ist in Fig. 3 dargestellt. In einem Baukörper 16, beispielsweise einer Bahnsteigkante, ist eine Vertiefung 18 vorgesehen. In diese ist hier eine Schicht von linsenförmigen Glas-Pigment-Körpern 20 eingelegt. Diese Körper 20 können wiederum in einer Matrix 22 mit einem silikatischen Binder eingelegt sein. Auch eine Matrix mit einem Kunststoffbinder, beispielsweise einem Epoxidharz als Binder, wäre denkbar. Die Glas-Pigment-Körper können auch in einer Elastomerschicht, vorzugsweise einer Chlor-Kautschuk-Schicht, gebunden sein.

Grundsätzlich kommen für die Einbettung der Glas-Pigment-Körper neben silikatischen Bindemitteln als Bindemittel Thermo- bzw. Duroplaste sowie Elastomere in Frage, beispielsweise Polyäthylen, Polyvenylchlorid, Polyamide, Polyurethane, Polystyrol, Polyester, Epoxidharze, Silikone, Silikon-Kautschuk sowie Natur- und Sythesekautschuk. Die Bindemittel können auch hier mit Füllstoffen versehen sein. Hierbei sollte auf eine möglichst hohe Transparenz des Binders und der Füllstoffe geachtet werden.

Mit den erwähnten Thermo- bzw. Duroplasten sowie Elastomeren lassen sich Glas-Pigment-Körper auf beliebige Oberflächen auftragen. So ist beispielsweise eine nachleuchtende Beschichtung von Verkehrsschildern möglich. Aber auch einzelne nachleuchtende Markierungspunkte, beispielsweise auf Türschildern zur Schlüssellochmarkierung, sind möglich.

Die Glas-Pigment-Körper können aber auch durch Erwärmen auf die Erweichungstemperatur ohne Matrix auf einen metallischen Träger aufgeschmolzen werden.

Bei Verkehrsschildern, wie sie beispielsweise in Fig. 4 dagestellt sind, werden vielfach lichtreflektierende Schichten in Form von sehr kleinen Glaskugeln 24 aufgetragen, wie in Fig. 5 dargestellt. Wenn auf das Schild solche Reflexionskörper (Glaskugeln 24) in Verbindung mit insbesondere kugelförmigen Glas-Pigment-Körpern 26 aufgetragen werden, erhalten solche Schilder neben dee Reflexionseigenschaft auch nachleuchtende Eigenschaften.

## Patentansprüche

1. Verfahren zur Herstellung von mit einem Glas ummantelten fluoreszierenden oder phosphoreszierenden Pigmenten, **dadurch gekennzeichnet**, daß ein schwermetallfreies Glas, das als Bestandteile Kombinationen der folgenden Bestandteile aufweist:

   | | |
   |---|---|
   | $SiO_2$ | 20 – 70 Massen-% |
   | $B_2O_3$ | 5 – 35 Massen-% |
   | $Li_2O$ und/oder $Na_2O$ und/oder $K_2O$ | 15 – 35 Massen-% |
   | CaO | 0 – 10 Massen-% |
   | $Al_2O_3$ | 0 – 20 Massen-% |
   | ZnO | 0 – 5 Massen-% |
   | F | 0 – 2 Massen-% |

   und eine Schmelz- oder Erweichungstemperatur niedriger als 800 °C hat, in fein vermahlener Form mit pulverförmigem Pigment im Verhältnisbereich 100 : 1 bis 1 : 1, vorzugsweise 5 : 1 bis 2 : 1, vermischt und das Glas anschließend auf eine Temperatur aufgeheizt wird, bei der das Glas soweit erweicht, daß das Pigment vom Glas umschlossen wird.

2. Verfahren nach Anspruch 1, dadurch gekennzeichnet, daß dem Gemisch ein die Erweichungstemperatur herabsetzendes Flußmittel zugefügt wird.

3. Verfahren nach Anspruch 1 oder 2, dadurch gekennzeichnet, daß dem Gemisch feinkörniger Quarzsand zugefügt wird.

4. Verfahren nach Anspruch 1, dadurch gekennzeichnet, daß Glas des Drei-Stoff-Systems $Na_2O$-$B_2O_3$-$SiO_2$ verwendet wird.

5. Verfahren nach Anspruch 4, dadurch gekennzeichnet, daß ein Glas mit 25 bis 30 Massen-% $Na_2O$, 25 bis 30 Massen-% $B_2O_3$ und 45 bis 50 Massen-% $SiO_2$ verwendet wird.

6. Verfahren nach Anspruch 5, dadurch gekennzeichnet, daß ein Glas mit 27 Massen-% $Na_2O$, 27 Massen-% $B_2O_3$ und 46 Massen-% $SiO_2$ verwendet wird.

7. Verfahren nach Anspruch 1, dadurch gekennzeichnet, daß ein Glas des Drei-Stoff-Systems CaO (5 bis 10 Massen-%), $Al_2O_3$ (5 bis 20 Massen-%), $SiO_2$ (40 bis 60 Massen-%) mit einem Zusatz von $B_2O_3$ (5 bis 30 Massen-%) zur Schmelztemperaturerniedrigung verwendet wird.

8. Verfahren nach Anspruch 1, dadurch gekennzeichnet, daß als Glas eine bleifreie transparente Aluminium-Emailfritte verwendet wird.

**9.** Verfahren nach einem der vorhergehenden Ansprüche, dadurch gekennzeichnet, daß das Gemisch in Blöcken erschmolzen wird, die zu einem Granulat zerkleinert werden.

**10.** Verfahren nach Anspruch 9 , dadurch gekennzeichnet, daß das Glasgranulat eine Korngröße von 0,1 bis 20 mm aufweist.

**11.** Verfahren nach Anspruch 9 , dadurch gekennzeichnet, daß das Granulat auf die Erweichungstemperatur des Glases wiedererhitzt wird.

**12.** Verfahren nach einem der Ansprüche 1 bis 8, dadurch gekennzeichnet, daß das Gemisch mit einer Flüssigkeit angeteigt und aus dem angeteigten Gemisch Formkörper gebilder werden und daß die Formkörper auf die Erweichungstemperatur erwärmt werden.

**13.** Verfahren nach Anspruch 12, dadurch gekennzeichnet, daß kugelförmige Pellets gebildet werden.

**14.** Verfahren nach Anspruch 12, dadurch gekennzeichnet, daß plattenförmige Körper gebildet werden.

**15.** Verfahren nach einem der Ansprüche 1 bis 8 , dadurch gekennzeichnet, daß das Gemisch mit einem flüssigen Haft- oder Bindemittel abgeteigt und auf Tragkörper aufgetragen und die Tragkörper mit dem darauf aufgetragenen Gemisch zum Erschmelzen des Glases erwärmt werden.

**16.** Verfahren nach einem der Ansprüche 1 bis 8 , dadurch gekennzeichnet, daß das Gemisch auf einem metallischen Träger aufgetragen und darauf aufgeschmolzen wird.

**17.** Verfahren nach Anspruch 16, dadurch gekennzeichnet, daß Granulat oder Kugeln von mit Glas umschlossenen Pigmenten auf einer metallischen Oberfläche aufgebracht und darauf aufgeschmolzen werden.

**18.** Verfahren nach einem der Ansprüche 8 bis 14, dadurch gekennzeichnet, daß die Körper, die aus mit Glas umschlossenen Pigmenten bestehen oder mit einem Auftrag aus mit Glas umschlossenen Pigmenten versehen sind, in eine Matrix eingebettet auf einen Träger als Überzugaufgetragen werden.

**19.** Verfahren nach Anspruch 18, dadurch gekennzeichnet, daß die Matrix Zement, Gips oder Kalk als Bindemittel enthält.

**20.** Verfahren nach Anspruch 18, dadurch gekennzeichnet, daß die Matrix weißen Zement und weißen, reinen Quarzkies/-sand und/oder Quarzglas enthält.

**21.** Verfahren nach Anspruch 18, dadurch gekennzeichnet, daß zur Herstellung von Betonbauteilen das Granulat bzw. die Körper in eine Form eingelegt und mit einer dünnen Schicht aus einer Mischung aus weißem Zement und weißem, reinen Quarzkies/-sand und/oder Quarzglas hinterfüllt werden und daß die Form mit Beton aufgefüllt wird.

**22.** Verfahren nach Anspruch 20, dadurch gekennzeichnet, daß plattenförmige Formkörper auf eine mit einem Abbindeverzögerer beschichtete Haftfolie aufgebracht und damit in die Form eingelegt werden.

**23.** Verfahren nach Anspruch 18, dadurch gekennzeichnet, daß das Granulat bzw. die Formkörper in einen Mörtel eingemischt werden, dessen Bindemittel einen hohen Weißegrad hat.

**24.** Verfahren nach Anspruch 18, dadurch gekennzeichnet, daß als Matrix Duroplaste, Thermoplaste oder Elastomere verwendet werden.


## Claims

**1.** Process for producing fluorescent or phosphorescent pigments coated with a glass, <u>characterized in that</u> a heavy metal-free glass which contains as components combinations of the following components:

| | |
|---|---|
| $SiO_2$ | 20 – 70% by weight |
| $B_2O_3$ | 5 – 35% by weight |
| $Li_2O$ and/or $Na_2O$ and/or $K_2O$ | 15 – 35% by weight |
| $CaO$ | 0 – 10% by weight |
| $Al_2O_3$ | 0 – 20% by weight |
| $ZnO$ | 0 – 5% by weight |
| $F$ | 0 – 2% by weight |

and has a melting or softening temperature of less than 800°C is mixed in finely ground form with powdery pigment in the ratio range 100 : 1 to 1 : 1, preferably 5 : 1 to 2 : 1, and the glass is subsequently heated to a temperature at which the glass softens to such an extent that the pigment is surrounded by the glass.

2. Process according to claim 1, <u>characterized in that</u> a fluxing agent reducing the softening temperature is added to the mixture.

3. Process according to claim 1 or 2, <u>characterized in that</u> fine-grained quartz sand is added to the mixture.

4. Process according to claim 1, <u>characterized in that</u> glass of the three-substance system $Na_2O$-$B_2O_3$-$SiO_2$ is used.

5. Process according to claim 4, <u>characterized in that</u> a glass containing 25 to 30% by weight $Na_2O$, 25 to 30% by weight $B_2O_3$ and 45 to 50% by weight $SiO_2$ is used.

6. Process according to claim 5, <u>characterized in that</u> a glass containing 27% by weight $Na_2O$, 27% by weight $B_2O_3$ and 46% by weight $SiO_2$ is used.

7. Process according to claim 1, <u>characterized in that</u> a glass of the three-substance system $CaO$ (5 to 10% by weight), $Al_3O_3$ (5 to 20% by weight), $SiO_2$ (40 to 60% by weight) with the addition of $B_2O_3$ (5 to 30% by weight) for reducing the melting temperature is used.

8. Process according to claim 1, <u>characterised in that</u> a lead-free transparent aluminium-enamel frit is used as a glass.

9. Process according to any one of the preceding claims, <u>characterised in that</u> the mixture is melted in blocks which are comminuted to a granulate.

10. Process according to claim 9, <u>characterised in that</u> the glass granulate has a grain size of 0.1 to 20 mm.

11. Process according to claim 9, <u>characterised in that</u> the granulate is reheated to the softening temperature of the glass.

12. Process according to any one of claims 1 to 8, <u>characterised in that</u> the mixture is rendered pasty with a liquid and mouldings are formed from the mixture rendered pasty and that the mouldings are heated to the softening temperature.

13. Process according to claim 12, <u>characterised in that</u> spherical-shaped pellets are formed.

14. Process according to claim 12, <u>characterised in that</u> slab-shaped bodies are formed.

15. Process according to any one of claims 1 to 8, <u>characterised in that</u> the mixture is rendered pasty with a liquid adhesive agent or binder and applied to substrates and that the substrates with the mixture applied to them are heated in order to melt the glass.

16. Process according to any one of claims 1 to 8, <u>characterised in that</u> the mixture is applied to a metal substrate and fused onto it.

**17.** Process according to claim 16, <u>characterised in that</u> granulate or spheres of pigments surrounded with glass are applied to a metal surface and fused onto it.

**18.** Process according to any one of claims 8 to 14, <u>characterised in that</u> the bodies which consist of pigments surrounded with glass or are provided with a coating of pigments surrounded with glass are, embedded in a matrix, applied as coating to a substrate.

**19.** Process according to claim 18, <u>characterised in that</u> the matrix contains cement, gypsum or lime as binder.

**20.** Process according to claim 18, <u>characterised in that</u> the matrix contains white cement and white, pure quartz gravel/quartz sand and/or quartz glass.

**21.** Process according to claim 18, <u>characterised in that</u> for the production of precast concrete components the granulate or the bodies are placed in a mould and backfilled with a thin layer of a mixture of white cement and white, pure quartz gravel/quartz sand and/or quartz glass and that the mould is filled up with concrete.

**22.** Process according to claim 20, <u>characterised in that</u> slab-shaped mouldings are applied to an adhesive film coated with a setting inhibitor and are placed in the mould together with the latter.

**23.** Process according to claim 18, <u>characterised in that</u> the granulate or the mouldings are blended into a mortar whose binder has a high whiteness.

**24.** Process according to claim 18, <u>characterised in that</u> thermoset materials, thermoplastic materials or elastomers are used as matrix.

**Revendications**

**1.** Procédé de fabrication de pigments fluorescents ou phosphorescents enrobés d'un verre, caractérisé en ce qu'un verre ne contenant pas de métaux lourds, qui contient, comme constituants, les combinaisons des constituants suivants :

| | |
|---|---|
| $SiO_2$ | 20 – 70 % en poids |
| $B_2O_3$ | 5 – 35 % en poids |
| $Li_2O$ et/ou $Na_2O$ et/ou $K_2O$ | 15 – 35 % en poids |
| $CaO$ | 0 – 10 % en poids |
| $Al_2O_3$ | 0 – 20 % en poids |
| $ZnO$ | 0 – 5 % en poids |
| $F$ | 0 – 2 % en poids |

et a une température de fusion ou de ramollissement inférieure à 800°C, est mélangé, sous une forme finement broyée, avec un pigment pulvérulent, selon un rapport allant de 100 : 1 à 1 : 1, de préférence 5 : 1 à 2 : 1, et ensuite, le verre est chauffé à une température à laquelle il se ramollit à un point tel que le pigment est entouré par le verre.

**2.** Procédé selon la revendication 1, caractérisé en ce qu'on ajoute, au mélange, un flux abaissant la température de ramollissement.

**3.** Procédé selon la revendication 1 ou 2, caractérisé en ce qu'on ajoute, au mélange, du sable de quartz à grain fin.

**4.** Procédé selon la revendication 1, caractérisé en ce qu'on utilise le verre du système ternaire $Na_2O$-$B_2O_3$-$SiO_2$.

**5.** Procédé selon la revendication 4, caractérisé en ce qu'on utilise un verre contenant 25 à 30 % en poids de $Na_2O$, 25 à 30 % en poids de $B_2O_3$ et 45 à 50 % en poids de $SiO_2$.

**6.** Procédé selon la revendication 5, caractérisé en ce qu'on utilise un verre contenant 27 % en poids de $Na_2O$, 27 % en poids de $B_2O_3$ et 46 % en poids de $SiO_2$.

**7.** Procédé selon la revendication 1, caractérisé en ce qu'on utilise un verre du système ternaire CaO (5 à 10 % en poids), $Al_2O_3$ (5 à 20 % en poids), $SiO_2$ (40 à 60 % en poids) avec addition de $B_2O_3$ (5 à 30 % en poids) pour abaisser la température de fusion.

**8.** Procédé selon la revendication 1, caractérisé en ce qu'on utilise, comme verre, une fritte d'aluminium et d'émail, transparente et sans plomb.

**9.** Procédé selon l'une des revendications précédentes, caractérisé en ce qu'on fait fondre le mélange en blocs et on broie ceux-ci en granules.

**10.** Procédé selon la revendication 9, caractérisé en ce que les granules de verre ont une grosseur de grain allant de 0,1 à 20 mm.

**11.** Procédé selon la revendication 9, caractérisé en ce qu'on continue de chauffer les granules à la température de ramollissement du verre.

**12.** Procédé selon une des revendications 1 à 8, caractérisé en ce qu'on transforme le mélange en une pâte avec un liquide et, à partir du mélange transformé en pâte, on forme des produits moulés et on chauffe les produits moulés à la température de ramollissement.

**13.** Procédé selon la revendication 12, caractérisé en ce qu'on forme des boulettes sphériques.

**14.** Procédé selon la revendication 12, caractérisé en ce qu'on forme des produits en plaque.

**15.** Procédé selon une des revendications 1 à 8, caractérisé en ce qu'on transforme le mélange en une pâte avec un plastifiant ou un liant, on l'applique sur des éléments de support et on chauffe les éléments de support revêtus du mélange pour faire fondre le verre.

**16.** Procédé selon une des revendications 1 à 8, caractérisé en ce qu'on applique le mélange sur un support métallique et on le fait fondre sur celui-ci.

**17.** Procédé selon la revendication 16, caractérisé en ce qu'on applique des granules ou des billes de pigments entourés de verre sur une surface métallique et on les fait fondre sur cette surface.

**18.** Procédé selon une des revendications 8 à 14, caractérisé en ce que les éléments formés de pigments entourés de verre ou pourvus d'un revêtement formé de pigments entourés de verre sont noyés dans une matrice qui, en tant que revêtement, est appliquée sur un support.

**19.** Procédé selon la revendication 18, caractérisé en ce que la matrice contient du ciment, du plâtre ou de la chaux, comme liant.

**20.** Procédé selon la revendication 18, caractérisé en ce que la matrice contient du ciment blanc et du gravier ou du sable de quartz blanc pur et/ou du verre de quartz.

**21.** Procédé selon la revendication 18, caractérisé en ce que, pour la fabrication d'éléments de construction en béton, on place les granules ou les éléments dans un moule, on les recouvre d'une couche mince d'un mélange de ciment blanc et de gravier ou de sable de quartz blanc et pur et/ou de verre de quartz et on finit de remplir le moule avec du béton.

**22.** Procédé selon la revendication 20, caractérisé en ce qu'on applique des éléments moulés en forme de plaque sur une feuille adhésive revêtue d'un retardateur de prise et on les introduit de cette manière dans le moule.

**23.** Procédé selon la revendication 18, caractérisé en ce qu'on mélange les granules et les éléments moulés, dont le liant a un degré de blanc élevé, dans un mortier.

**24.** Procédé selon la revendication 18, caractérisé en ce qu'on utilise, comme matrice, des matières thermodurcissables, des matières thermoplastiques ou des élastomères.

Fig.1a

Fig.1b

Fig.1c

Fig.1d

Fig.1e

Fig.1f

Fig.1g

Fig. 2

Fig. 3

Fig. 4

Fig. 5